# EUROPEAN PATENT APPLICATION

(11) **EP 2 472 090 A2**
(43) Date of publication of application: **04.07.2012**
(21) Application number: 11250948.4
(22) Date of filing: 28.12.2011
(51) Int. Cl.: F02K 3/10

(54) **A gas engine turbine comprising a thrust augmentation system**

(30) Priority: 30.12.2010 US 201013428760
(71) Applicant: Rolls-Royce North American Technologies, Inc., Indianapolis, IN 46241 (US)
(72) Inventor: Oechsle, Victor Lewis, Avon Indiana 46123 (US); Eifert, Andrew, Indianapolis Indiana 46219 (US); Vetters, Daniel Kent, Indianapolis Indiana 46234 (US); Auker, Bradley Eugene, Coatesville Indiana 46121 (US)
(74) Representative: Dauncey, Mark Peter

(57) **Abstract**

One embodiment of the present invention is a gas turbine engine (10), comprising a thrust augmentation system (64) with a fluidic flameholder, which ejects the fuel (82) by generating an obstruction to the exhaust flow of the turbine engine.

## Description

### Cross Reference to Related Applications

The present application claims benefit of U.S. Provisional Patent Application No. 61/428,760, filed December 30, 2010, entitied Thrust Augmented Gas Turbine Engine, which is incorporated herein by reference.

### Field of the Invention

The present invention relates to gas turbine engines, and more particularly, to gas turbine engine thrust augmentation systems.

### Background

Gas turbine engines with thrust augmentation systems remain an area of interest. Some existing systems have various shortcomings, drawbacks, and disadvantages relative to certain applications. Accordingly, there remains a need for further contributions in this area of technology.

### Summary

One embodiment of the present invention is a unique gas turbine engine having a unique thrust augmentation system. Other embodiments include apparatuses, systems, devices, hardware, methods, and combinations for thrust augmented gas turbine engines. Further embodiments, forms, features, aspects, benefits, and advantages of the present application will become apparent from the description and figures provided herewith.

### Brief Description of the Drawings

The description herein makes reference to the accompanying drawings wherein like reference numerals refer to like parts throughout the several views, and wherein:
FIG. 1 schematically illustrates some aspects of a non-limiting example of a gas turbine engine in accordance with an embodiment of the present invention.
FIG. 2 is a cross section illustrating some aspects of a non-limiting example of a fluidic flameholder in accordance with an embodiment of the present invention.
FIG. 3 illustrates some aspects of the fluidic flameholder of FIG. 2 during fluid ejection from the fluidic flameholder.

### Detailed Description

For purposes of promoting an understanding of the principles of the invention, reference will now be made to the embodiments illustrated in the drawings, and specific language will be used to describe the same. It will nonetheless be understood that no limitation of the scope of the invention is intended by the illustration and description of certain embodiments of the invention. In addition, any alterations and/or modifications of the illustrated and/or described embodiment(s) are contemplated as being within the scope of the present invention. Further, any other applications of the principles of the invention, as illustrated and/or described herein, as would normally occur to one skilled in the art to which the invention pertains, are contemplated as being within the scope of the present invention.

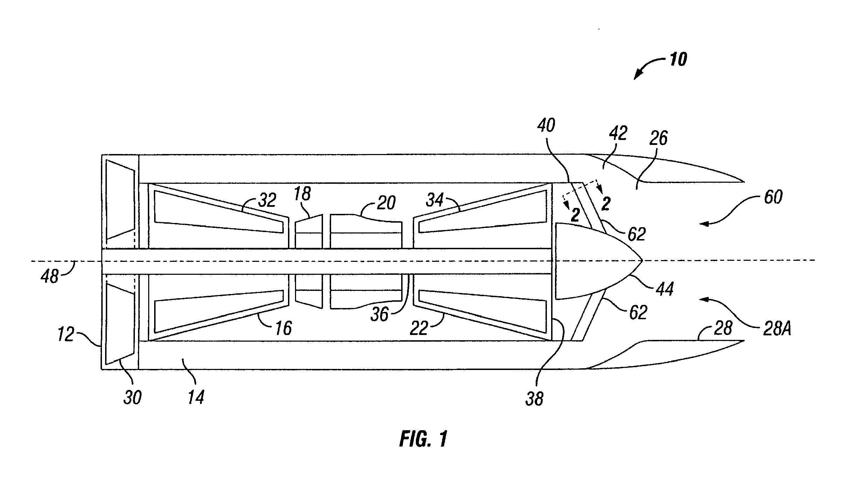

Referring to the drawings, and in particular FIG. 1, some aspects of a non-limiting example of a gas turbine engine 10 in accordance with an embodiment of the present invention are schematically depicted. In one form, gas turbine engine 10 is an aircraft propulsion power plant. In one form, gas turbine engine 10 is a multi-spool turbofan engine. In other embodiments, gas turbine engine 10 may take other forms, and may be, for example, a single spool turbojet engine.

As a turbofan engine, gas turbine engine 10 includes a fan system 12, a bypass duct 14, a compressor system 16, a diffuser 18, a combustion system 20, a turbine system 22, a discharge duct 26 and a nozzle 28. Bypass duct 14 and compressor system 16 are in fluid communication with fan system 12. Diffuser 18 is in fluid communication with compressor system 16. Combustion system 20 is in fluid communication with diffuser 18. Turbine system 22 is in fluid communication with combustion system 20, and is operative to discharge a core exhaust flow. In one form, combustion system 20 includes a combustion liner (not shown) that contains a continuous combustion process. In other embodiments, combustion system 20 may take other forms, and may be, for example, a wave rotor combustion system, a rotary valve combustion system, or a slinger combustion system, and may employ deflagration and/or detonation combustion processes.

Fan system 12 includes a fan rotor system 30. In various embodiments, fan rotor system 30 includes one or more rotors (not shown) that are powered by turbine system 22. Bypass duct 14 is operative to transmit a bypass flow generated by fan system 12 to nozzle 28. Compressor system 16 includes a compressor rotor system 32. In various embodiments, compressor rotor system 32 includes one or more rotors (not shown) that are powered by turbine system 22. Each compressor rotor includes a plurality of compressor blades (not shown). Turbine system 22 includes a turbine rotor system 34. In various embodiments, turbine rotor system 34 includes one or more rotors (not shown) operative to drive fan rotor system 30 and compressor rotor system 32. Each turbine rotor includes a plurality of turbine blades (not shown). Turbine rotor system 34 is drivingly coupled to compressor rotor system 32 and fan rotor system 30 via a shafting system 36. In various embodiments, shafting system 36 includes a plurality of shafts that may rotate at the same or different speeds and directions. In some embodiments, only a single shaft may be employed. Turbine system 22 is operative to discharge an engine 10 core exhaust flow to nozzle 28. In one form, fan rotor system 30, compressor rotor system 32, turbine rotor system 34 and shafting system 36 rotate about an engine centerline 48. In other embodiments, all or parts of fan rotor system 30, compressor rotor system 32, turbine rotor system 34 and shafting system 36 may rotate about one or more other axes of rotation in addition to, or in place of, engine centerline 48.

Turbine system 22 includes a turbine outlet 38 and a turbine outlet duct 40 extending from turbine outlet 38 toward nozzle 28. Discharge duct 26 extends between turbine outlet duct 40 and an inlet portion of engine nozzle 28. Discharge duct 26 is operative to direct bypass flow and core exhaust flow from a bypass duct discharge portion 42 and turbine outlet duct 40, respectively, into nozzle system 28. In some embodiments, discharge duct 26 may be considered a part of nozzle 28. Nozzle 28 is in fluid communication with fan system 12 via bypass duct 14 and discharge duct 26. Nozzle system 28 is in fluid communication with turbine system 22 via turbine outlet duct 40 and discharge duct 26. Nozzle 28 is operative to receive the bypass flow from fan system 12, to receive the core exhaust flow from turbine system 22, and to discharge both via nozzle exit 28A as an engine exhaust flow, i.e., a thrust-producing flow.

During the operation of gas turbine engine 10, air is drawn into the inlet of fan 12 and pressurized by fan 12. Some of the air pressurized by fan 12 is directed into compressor system 16 as core flow, and some of the pressurized air is directed into bypass duct 14 as bypass flow, and is discharged into nozzle 28 via discharge duct 26. Compressor system 16 further pressurizes the portion of the air received therein from fan 12, which is then discharged into diffuser 18. Diffuser 18 reduces the velocity of the pressurized air, and directs the diffused core airflow into combustion system 20. Fuel is mixed with the pressurized air in combustion system 20, which is then combusted. The hot gases exiting combustion system 20 are directed into turbine system 22, which extracts energy in the form of mechanical shaft power sufficient to drive fan system 12 and compressor system 16 via shafting system 36. The core flow exiting turbine system 22 is directed along between turbine outlet duct 42 and engine tail cone 44 into discharge duct 26, along with the bypass flow from bypass duct 14. Discharge duct 26 is configured to receive the bypass flow and the core flow, and to discharge both as an engine exhaust flow into nozzle 28, e.g., for providing thrust, such as for aircraft propulsion.

Engine 10 includes a thrust augmentation (afterburner) system 60 for providing increased thrust. Thrust augmentation system 60 includes a plurality of fluidic flameholders 62. Thrust augmentation system 60 is operative to augment the thrust output of engine 10 by adding fuel to the exhaust flow of engine 10 downstream of turbine system 22, and igniting the added fuel. In one form, the added fuel is ignited by igniters (not shown). In other embodiments, the fuel may be ignited via auto-ignition or via other means. The combustion of the added fuel adds heat to the exhaust flow, thereby increasing the volume of the exhaust gases and hence increasing the velocity of the exhaust flow exiting nozzle exit 28A. Fluidic flameholders 62 are configured to hold flames during thrust augmentation operation, e.g., so that a continuous combustion process takes place. Flameholders 62 are referred to herein as "fluidic" flameholders because flameholders 62 employ a fluid to generate obstructions to exhaust flow, as opposed to a mechanical device forming an obstruction, such as in conventional flameholders.

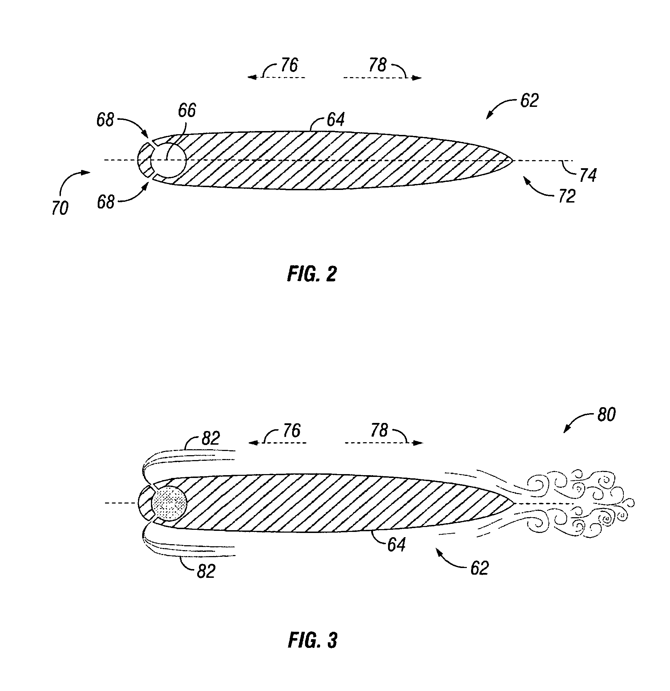

Referring to FIGS. 2 and 3 in conjunction with FIG. 1, fluidic flameholders 62 are disposed downstream of turbine system 22 and upstream of nozzle exit 28A. Fluidic flameholders 62 include a flowpath structure 64, a fluid supply passage 66 and a plurality of fluid discharge openings 68. In various embodiments, flowpath structure 64 may be disposed adjacent to the exhaust flow and/or may be disposed partially or fully within the exhaust flow. In one form, flowpath structure 64 extends radially inward of a turbine outlet duct 42, and is positioned downstream of turbine system 22, i.e., downstream of turbine outlet 38. In other embodiments, flowpath structure 64 may be disposed in other locations, e.g., further downstream of turbine system 22, e.g., in discharge duct 26 and/or nozzle 28; or further upstream toward turbine outlet 38. In one form, flowpath structure 64 is configured as a strut that extends into the exhaust flow. In other embodiments, flowpath structure 64 may take one or more other forms. In one form, flowpath structure 64 extends from turbine outlet duct 42 to tailcone 44. In other embodiments, flowpath structure 64 may extend only part way between turbine outlet duct 42 and tailcone 44. In still other embodiments, flowpath structure 64 may be arranged otherwise, e.g., and may extend from other locations.

Fluid supply passage 66 is in fluid communication with a pressurized fluid source (not shown), and is operative to supply fluid to fluid discharge openings 68. Fluid discharge openings 68 are in fluid communication with fluid supply passage 66 on one end, and with the exhaust flow on the other end. Fluid discharge openings 68 are operative to eject the fluid received from fluid supply passage 66 into the exhaust flow. The number and/or shape of fluid discharge openings 68 may vary with the needs of the application. In one form, the fluid employed by fluidic flameholder 62 is liquid fuel. In other embodiments, other fluids, including gases and/or liquids, and including or not including fuel may be employed. In one form, fluid supply passage 66 and fluid discharge openings 68 are positioned at an upstream end 70 of flowpath structure 64. In other embodiments, fluid supply passage 66 and/or one or more fluid supply openings 68 may be positioned at a downstream end 72 of flowpath structure 64 and/or other locations on flowpath structure 64 in addition to or in place of upstream end 70. In one form, fluid discharge openings 68 are disposed on both sides of a centerline 74 of flowpath structure 64, and are operative to eject fluid on both sides of centerline 74. In other embodiments, one or more fluid discharge openings 68 may be positioned on only one side of centerline 74, and may be operative to eject fluid on one or both sides of centerline 74. In one form, the fluid discharge openings 68 are configured to eject the fluid with a velocity component in a direction 76 opposite the direction 78 of the exhaust flow. In other embodiments, fluid discharge openings 68 may be configured to eject the fluid in any suitable direction.

Fluidic flameholder 62 is operative to generate an obstruction to the exhaust flow by ejecting the fluid from flowpath structure 64 via fluid discharge openings 68, wherein the obstruction is configured to hold a flame during thrust augmentation operation of engine 10. In one form, fluidic flameholder 62 is configured to generate the obstruction in the form of a low pressure area 80 downstream of fluid discharge openings 68 by ejecting fuel 82 into the exhaust flow. In other embodiments, the obstruction may take one or more other forms, e.g., a high pressure area. The obstruction or low pressure area 80 is configured to hold a flame during thrust augmentation operation. In one form, fluidic flameholder 62 is configured to generate the obstruction adjacent to downstream end 72 of flowpath structure 64. In other embodiments, fluidic flameholder 62 may be configured to generate the obstruction in other locations near and/or spaced apart from flowpath structure 64. The size, shape and location of the obstruction or low pressure area 80 may vary with the application, and may be determined, for example, using commercially available computational fluid dynamics analysis software. Parameters that affect the size and location of the obstruction or low pressure area include, for example and without limitation, the type, density and viscosity of the fluid ejected from fluidic flameholder 62, as well as the pressure, temperature and velocity of the exhaust flow.

Embodiments of the present invention include a gas turbine engine, comprising: a compressor; a combustor in fluid communication with the compressor; a turbine in fluid communication with the combustor and operative to discharge an exhaust flow; a nozzle in fluid communication with the turbine, wherein the nozzle includes a nozzle exit; and wherein the nozzle is operative to receive the exhaust flow from the turbine and to discharge the exhaust flow through the nozzle exit; and a thrust augmentation system, including a fluidic flameholder disposed downstream of the turbine and upstream of the nozzle exit, wherein the fluidic flameholder includes a flowpath structure disposed adjacent to the exhaust flow and/or at least partially within the exhaust flow; wherein the fluidic flameholder is operative to generate a low pressure area by ejecting a fluid from the flowpath structure into the exhaust flow, wherein the low pressure area is operative to hold a flame during thrust augmentation operation of the gas turbine engine.

In a refinement, the flowpath structure includes a fluid supply passage for supplying the fluid and a fluid discharge opening for ejecting the fluid; wherein the fluid discharge opening is in fluid communication with both the fluid supply passage and the exhaust flow; wherein the fluid discharge opening is operative to eject the fluid into the exhaust flow.

In another refinement, the flowpath structure is a strut extending at least partially into the exhaust flow.

In yet another refinement, the ejected fluid is a liquid.

In still another refinement, the ejected fluid includes fuel.

In yet still another refinement, the ejected fluid is fuel.

In a further refinement, the gas turbine engine further comprises a plurality of fluid discharge openings disposed in the flowpath structure and operative to eject the fluid into the exhaust flow.

In a yet further refinement, the flowpath structure is configured as a strut having an upstream end and a downstream end; and wherein at least some of the fluid discharge openings are positioned at the upstream end of the strut.

In a still further refinement, the strut has a downstream end, and wherein the low pressure area is disposed adjacent to the downstream end.

Embodiments of the present invention include a gas turbine engine, comprising: a fan; a compressor in fluid communication with the fan; a combustor in fluid communication with the compressor; a turbine in fluid communication with the combustor and operative to discharge an exhaust flow; a bypass duct in fluid communication with the fan and operative to receive a bypass flow from the fan; a nozzle in fluid communication with the turbine and in fluid communication with the bypass duct, wherein the nozzle includes a nozzle exit; and wherein the nozzle is operative to receive the exhaust flow from the turbine and to receive the bypass flow from the fan and to discharge both through the nozzle exit; and a thrust augmentation system, including a fluidic flameholder disposed downstream of the turbine and upstream of the nozzle exit, wherein the fluidic flameholder includes a flowpath structure disposed adjacent to the exhaust flow and/or at least partially within the exhaust flow; wherein the fluidic flameholder is operative to generate an obstruction to the exhaust flow by ejecting a fluid from the flowpath structure into the exhaust flow, wherein the obstruction is operative to hold a flame during thrust augmentation operation of the gas turbine engine.

In a refinement, the obstruction is in the form of a low pressure area operative to hold the flame during the thrust augmentation operation of the gas turbine engine.

In another refinement, the flowpath structure includes a fluid discharge opening for ejecting the fluid.

In yet another refinement, the obstruction is in the form of a low pressure area in the exhaust flow downstream of the fluid discharge opening.

In still another refinement, the gas turbine engine further comprises a plurality of fluid discharge openings disposed in the flowpath structure and operative to eject the fluid into the exhaust flow.

In yet still another refinement, the flowpath structure is configured as a strut having an upstream end and a downstream end; and wherein at least some of the fluid discharge openings are positioned at the upstream end of the strut.

In a further refinement, the strut has a downstream end, and wherein the obstruction is disposed adjacent to the downstream end.

In a yet further refinement, the flowpath structure has a centerline oriented in the direction of the exhaust flow; wherein at least one of the fluid discharge openings is oriented to eject the fluid on a first side of the centerline; and wherein at least another of the fluid discharge openings is oriented to eject the fluid on a second side of the centerline opposite the first side.

In a still further refinement, at least one of the fluid discharge openings is configured to eject the fluid with a velocity component in a direction opposite to the direction of exhaust flow.

Embodiments of the present invention include a gas turbine engine, comprising: a compressor; a combustor in fluid communication with the compressor; a turbine in fluid communication with the combustor and operative to discharge an exhaust flow; a nozzle in fluid communication with the turbine, wherein the nozzle includes a nozzle exit; and wherein the nozzle is operative to receive the exhaust flow from the turbine and to discharge the exhaust flow through the nozzle exit; and a thrust augmentation system, including means for holding a flame during thrust augmentation operation of the gas turbine engine, wherein the means for holding is disposed downstream of the turbine and upstream of the nozzle exit.

In a refinement, the means for holding includes a fluid discharge opening configured to generate an obstruction to the exhaust flow by ejecting a fluid into the exhaust flow, wherein the obstruction is operative to hold the flame during thrust augmentation operation of the gas turbine engine.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the spirit and.scope of the appended claims, which scope is to be accorded the broadest interpretation so as to encompass all such modifications and equivalent structures as permitted under the law. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A gas turbine engine, comprising:
a compressor;
a combustor in fluid communication with the compressor;
a turbine in fluid communication with the combustor and operative to discharge an exhaust flow;
a nozzle in fluid communication with the turbine, wherein the nozzle includes a nozzle exit; and wherein the nozzle is operative to receive the exhaust flow from the turbine and to discharge the exhaust flow through the nozzle exit; and
a thrust augmentation system, including a fluidic flameholder disposed downstream of the turbine and upstream of the nozzle exit, wherein the fluidic flameholder includes a flowpath structure disposed adjacent to the exhaust flow and/or at least partially within the exhaust flow; wherein the fluidic flameholder is operative to generate a low pressure area by ejecting a fluid from the flowpath structure into the exhaust flow, wherein the low pressure area is operative to hold a flame during thrust augmentation operation of the gas turbine engine.

2. The gas turbine engine of claim 1, wherein the flowpath structure includes a fluid supply passage for supplying the fluid and a fluid discharge opening for ejecting the fluid; wherein the fluid discharge opening is in fluid communication with both the fluid supply passage and the exhaust flow; wherein the fluid discharge opening is operative to eject the fluid into the exhaust flow.

3. The gas turbine engine of claim 1, wherein the flowpath structure is a strut extending at least partially into the exhaust flow.

4. The gas turbine engine of claim 1, further comprising a plurality of fluid discharge openings disposed in the flowpath structure and operative to eject the fluid into the exhaust flow.

5. The gas turbine engine of claim 4, wherein the flowpath structure is configured as a strut having an upstream end and a downstream end; and wherein at least some of the fluid discharge openings are positioned at the upstream end of the strut.

6. The gas turbine engine of claim 3 or 5, wherein the strut has a downstream end, and wherein the low pressure area is disposed adjacent to the downstream end.

7. The gas turbine engine of any preceding claim, wherein the ejected fluid is a liquid; or
wherein the ejected fluid includes fuel; or
wherein the ejected fluid is fuel.

8. A gas turbine engine, comprising:
a fan;
a compressor in fluid communication with the fan;
a combustor in fluid communication with the compressor;
a turbine in fluid communication with the combustor and operative to discharge an exhaust flow;
a bypass duct in fluid communication with the fan and operative to receive a bypass flow from the fan;
a nozzle in fluid communication with the turbine and in fluid communication with the bypass duct, wherein the nozzle includes a nozzle exit; and wherein the nozzle is operative to receive the exhaust flow from the turbine and to receive the bypass flow from the fan and to discharge both through the nozzle exit; and
a thrust augmentation system, including a fluidic flameholder disposed downstream of the turbine and upstream of the nozzle exit, wherein the fluidic flameholder includes a flowpath structure disposed adjacent to the exhaust flow and/or at least partially within the exhaust flow; wherein the fluidic flameholder is operative to generate an obstruction to the exhaust flow by ejecting a fluid from the flowpath structure into the exhaust flow, wherein the obstruction is operative to hold a flame during thrust augmentation operation of the gas turbine engine.

9. The gas turbine engine of claim 8, wherein the obstruction is in the form of a low pressure area operative to hold the flame during thrust the augmentation operation of the gas turbine engine.

10. The gas turbine engine of claim 8, wherein the flowpath structure includes a fluid discharge opening for ejecting the fluid.

11. The gas turbine engine of claim 10, wherein the obstruction is in the form of a low pressure area in the exhaust flow downstream of the fluid discharge opening.

12. The gas turbine engine of claim 8, further comprising a plurality of fluid discharge openings disposed in the flowpath structure and operative to eject the fluid into the exhaust flow.

13. The gas turbine engine of claim 12, wherein the flowpath structure is configured as a strut having an upstream end and a downstream end; and wherein at least some of the fluid discharge openings are positioned at the upstream end of the strut.

14. The gas turbine engine of claim 13, wherein the strut has a downstream end, and wherein the obstruction is disposed adjacent to the downstream end.

15. The gas turbine engine of claim 12, wherein the flowpath structure has a centerline oriented in the direction of the exhaust flow; wherein at least one of the fluid discharge openings is oriented to eject the fluid on a first side of the centerline; and wherein at least another of the fluid discharge openings is oriented to eject the fluid on a second side of the centerline opposite the first side.

16. The gas turbine engine of claim 12, wherein at least one of the fluid discharge openings is configured to eject the fluid with a velocity component in a direction opposite to the direction of exhaust flow.

17. A gas turbine engine, comprising:
a compressor;
a combustor in fluid communication with the compressor;
a turbine in fluid communication with the combustor and operative to discharge an exhaust flow;
a nozzle in fluid communication with the turbine, wherein the nozzle includes a nozzle exit; and wherein the nozzle is operative to receive the exhaust flow from the turbine and to discharge the exhaust flow through the nozzle exit; and
a thrust augmentation system, including means for holding a flame during thrust augmentation operation of the gas turbine engine, wherein the means for holding is disposed downstream of the turbine and upstream of the nozzle exit.

18. The gas turbine engine of claim 17, wherein the means for holding includes a fluid discharge opening configured to generate an obstruction to the exhaust flow by ejecting a fluid into the exhaust flow, wherein the obstruction is operative to hold the flame during thrust augmentation operation of the gas turbine engine.
